# EUROPÄISCHE PATENTSCHRIFT

(11) **EP 0 858 405 B1**
(45) Veröffentlichungstag und Bekanntmachung des Hinweises auf die Patenterteilung: **11.08.1999**
(21) Anmeldenummer: 96938153.2
(22) Anmeldetag: 08.11.1996
(51) Int. Cl.: B60T 8/36

(54) **ELEKTROHYDRAULISCHES AGGREGAT ZUR DRUCKREGELUNG IN KRAFTFAHRZEUGBREMSANLAGEN**
ELECTROHYDRAULIC UNIT FOR PRESSURE CONTROL IN MOTOR VEHICLE BRAKING SYSTEMS
UNITE ELECTRO-HYDRAULIQUE POUR REGULER LA PRESSION DE SYSTEMES DE FREINAGE D'AUTOMOBILES

(30) Priorität: 15.11.1995 DE 19542582
(43) Veröffentlichungstag der Anmeldung: 19.08.1998
(73) Patentinhaber: Continental Teves AG & Co. oHG, 60488 Frankfurt (DE)
(72) Erfinder: OTTO, Albrecht, D-61137 Schöneck (DE)
(86) Internationale Anmeldenummer: EP9604893
(87) Internationale Veröffentlichungsnummer: WO9718113

(56) Entgegenhaltungen:
- WO-A-91/16220
- WO-A-91/16221
- WO-A-92/04216
- DE-A- 2 128 168
- DE-A- 4 234 013

## Beschreibung

Die Erfindung betrifft ein elektrohydraulisches Aggregat zur Druckregelung in Kraftfahrzeugbremsanlagen nach dem Oberbegriff des Patentanspruchs 1.

Aus der gattungsbildenden DE4234013A1 ist bereits ein elektrohydraulisches Aggregat zur Druckregelung in Kraftfahrzeugbremsanlagen bekannt geworden, das in einem blockförmigen Gehäuse Kanäle und Aufnahmebohrungen aufweist. In die Aufnahmebohrungen sind elektromagnetisch betätigbare Einlaß- und Auslaßventile, Druckspeicher, Pumpkolben mit Pumpenventilen und Geräuschdämpfungskammern eingesetzt. Die Einlaßventile als auch die Auslaßventile befinden sich in zwei Ventilreihen, die zueinander parallel ausgerichtet sind. Zwischen den beiden Ventilreihen für die Einlaß- und Auslaßventile erstreckt sich die Aufnahmebohrung für die Pumpe. Seitlich zu den Aufnahmebohrungen für die Einlaß- und Auslaßventile führt von außen in das Gehäuse eine weitere Aufnahmebohrung für eine Geräuschdämpfungskammer. Zu dieser Aufnahmebohrung befinden sich in Parallelanordnung nebeneinander weitere Aufnahmebohrungen für die Druckspeicher. Die gewählte Parallelanordnung der Aufnahmebohrungen für die Druckspeicher und die Dämpfungskammer begrenzt infolge der beschränkten Kantenlänge des Gehäuses die maximalen Durchmesser der Druckspeicher und der Geräuschdämpfungskammern, so daß die Volumenaufnahme dieser Aufnahmebohrungen im wesentlichen durch die Bohrungstiefen verändert werden kann. Die Kantenlänge des Gehäuses wird überdies nicht nur durch die gewählte Nebeneinanderordnung der Aufnahmebohrungen für die Dämpfungskammern und die Druckspeicher bestimmt, sondern hängt auch im entscheidenden Maße von der Radialerstreckung der Pumpe ab. Bei vorliegender Konstruktion zum Stand der Technik befinden sich sowohl das Saug- als auch das Druckventil innerhalb des Pumpkolbens, wodurch sich eine relativ große Baulänge des Pumpkolbens ergibt.

In der DE-A-2128168 ist ein Antiblockierregelsystem für Fahrzeuge beschrieben, das in koaxialer Anordnung, mit einer entsprechenden Kanalverbohrung innerhalb einer einzigen Gehäuseebene, ein Einlaß- und Auslaßventil, ein Pumpensaug- und Pumpendruckventil sowie eine Blenden- und Rückschlagventilkombination aufweist. Achsparallel dazu befindet sich in der gleichen Gehäuseebene ein Pumpenmotor, der die in Querlage zwischen Saug- und Druckventil befindliche Pumpe antreibt.

Daher ist es die Aufgabe der Erfindung, ein elektrohydraulisches Aggregat der gattungsbildenden Art dahingehend zu verbessern, daß mit geringem Mitteleinsatz ein möglichst kompakt bauendes Gehäuse geschaffen werden kann, welches sich insbesondere durch einfache Herstellung und optimale Plazierung der einzelnen Funktionskomponenten auszeichnet.

Diese Aufgabe wird erfindungsgemäß für ein elektrohydraulisches Aggregat der eingangs genannten Gattung durch die den Patentanspruch 1 kennzeichnenden Merkmale gelöst.

Weitere Merkmale und Vorteile der Erfindung gehen im nachfolgenden aus der Beschreibung des Erfindungsgegenstandes anhand einer Zeichnung hervor.

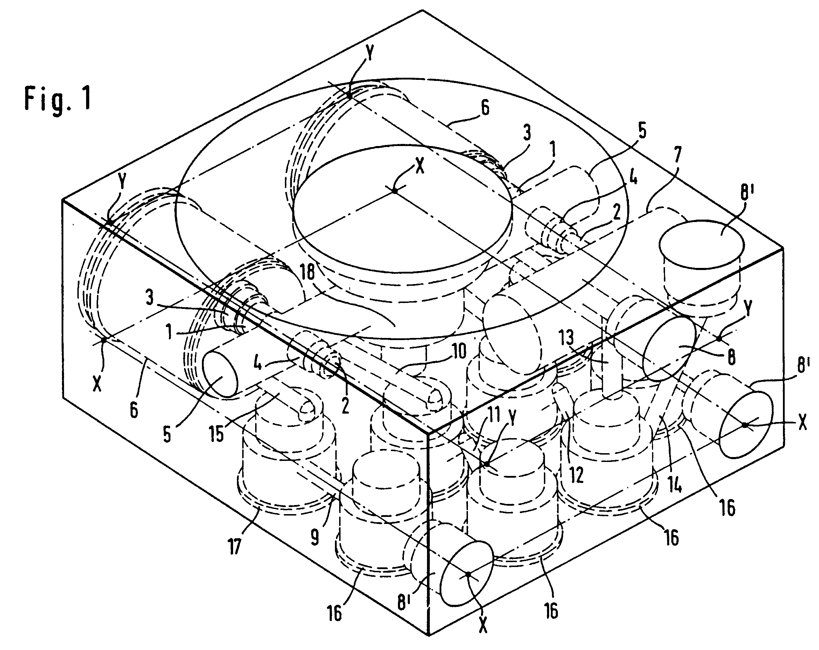

Die einzige Fig. 1 zeigt ein elektrohydraulisches Aggregat in räumlicher Darstellung in vergrößertem Maßstab. Es besteht aus einem im wesentlichen blockförmigen Gehäuse, in das Kanäle 1,2,9-15 und Aufnahmebohrungen 5-7,16,17 für die Einlaß- und Auslaßventile, Druckspeicher, Pumpe, Pumpenventile, Pumpenantrieb und Druckmittelanschlüsse vorgesehen sind. In einer ersten Gehäuseebene X befinden sich die Aufnahmebohrungen 16,17 für die Einlaß- und Auslaßventile, die senkrecht auf die Gehäuseebene X in das Gehäuse einmünden. In einer parallel zur ersten Gehäuseebene X gelegenen zweiten Gehäuseebene Y sind die Aufnahmebohrungen 5 der Pumpe und der Saugkanal 1 der Pumpe gelegen. Der Saugkanal 1 steht mit einer Aufnahmebohrung 6 des Druckspeichers in Verbindung. Der Durchmesser der Aufnahmebohrung 6 für den Druckspeicher erstreckt sich im seitlichen Bereich der ersten und zweiten Gehäuseebene X, Y. Erfindungsgemäß verläuft sowohl der Saugkanal 1 als auch der Druckkanal 2 entlang einer gemeinsamen Kanalachse in der zweiten Gehäuseebene Y, wobei der Saugkanal 1 das Saugventil 3 aufnimmt und der Druckkanal 2 das Druckventil 4 beinhaltet. Beide Pumpenventile sind somit auf der Kanalachse des Saug- und Druckkanals 1,2 koaxial hintereinander angeordnet. Diese Kanalachse steht rechtwinklig zur Achse der Aufnahmebohrung 5 für die Pumpe, so daß die Aufnahmebohrung 5 der Pumpe zwischen dem Saug- und Druckkanal 1,2 angeordnet ist. Durch das Einsetzen des Saug- und Druckventils 3,4 in die zugehörigen Kanäle 1,2 kann folglich die Aufnahmebohrung 5 der Pumpe kürzer gewählt werden, da der Pumpkolben durch die Elimination von Saug- und Druckventil 3,4 kürzer baut. Das Saug- und Druckventil 3,4 sind aus Richtung der Aufnahmebohrung 6 des Druckspeichers in den Saug- und Druckkanal 1,2 eingefügt. Damit ergibt sich nicht nur eine relativ einfache Verbohrung des Gehäuses, sondern auch ein relativ unproblematisches und montagegünstiges Einfügen der Pumpenventile in einer Reihenfolge, wonach zuerst das Druckventil 4 durch den Saugkanal 1 und quer durch die Aufnahmebohrung 5 in den Druckkanal 2 eingeschoben wird und anschließend das Saugventil 3 montiert wird. Zur Positionierung von Saug- und Druckventil 3,4 eignet sich vorzugsweise eine im Durchmesser unterschiedlich gewählte Abstufung des Saug- und Druckkanals 1,2, wonach entsprechend der vorangegangenen Darstellung das Druckventil im Durchmesser an den kleineren Innendurchmesser des Druckkanals 1 und das Saugventil 3 an den größeren Durchmesser des Saugkanals 1 angepaßt ist. Damit ist gleichzeitig ein Vertauschen beider Ventile ausgeschlossen. Ein weiterer Vorteil in der gewählten Anordnung und Konstruktion zur Druckmittelversorgung der Pumpe ergibt sich infolge des relativ kurzen Saugkanals 1, was das Ansaugverhalten aus dem Druckspeicher begünstigt. Der Druckkanal 2 mündet in eine achsparallel zur Aufnahmebohrung 5 der Pumpe ausgerichtete Geräuschdämpfungskammer 7, die gleichfalls im Bereich der zweiten Gehäuseebene Y gelegen ist. Durch die gewählte Parallelanordnung der Geräuschdämpfungskammer 7 zur Aufnahmebohrung 5 der Pumpe ergibt sich eine optimale Ausnutzung des von den Aufnahmebohrungen 16,17 der Einlaß- und Auslaßventile und den von den Druckmittelanschlüssen 8,8' begrenzten Zwischenraums im Gehäuse. Die Geräuschdämpfungskammer 7 erstreckt sich somit jeweils oberhalb den Ventilreihen der Einlaß- und Auslaßventile, womit sich relativ einfach eine kurze Druckmittelverbindung durch den abbildungsgemäßen Kanal 13 mit jeweils einer Aufnahmebohrung 16 der Einlaßventile und dem zu einem Bremsdruckgeber führenden Druckmittelanschluß 8 herstellen läßt. Die Geräuschdämpfungskammer 7 befindet sich somit zwischen dem Druckkanal 2 und einem achsparallel zum Druckmittelkanal 2 auf der entgegengelegenen Seite der Geräuschdämpfungskammer 7 einmündenden Druckmittelanschluß 8. Aus der Abbildung ist ersichtlich, daß außer dem jeweils zum Bremsdruckgeber führenden Druckmittelanschluß 8 weitere Druckmittelanschlüsse 8' vorgesehen sind, die mit den Aufnahmebohrungen 16 der Einlaßventile in Verbindung stehen und zu den Radbremsen führen. Bei der vorgestellten Anordnung ist bemerkenswert, daß vorteilhaft bis auf die Kanäle 11,12 und 14 alle übrigen Kanäle 1,2,9-15 möglichst rechtwinklig in das Gehäuse eindringen, was die automatengerechte Herstellung begünstigt. Der jeweils zu den Radbremsen führende Druckmittelanschluß 8' erstreckt sich senkrecht und geradlinig durch die jeweilige Aufnahmebohrung 16 des Einlaßventils bis zur Aufnahmebohrung 17 des Auslaßventils. Der hierfür entsprechende Kanal trägt die Bezugsziffer 9 und befindet sich im Bereich der Gehäuseebene X. Ein weiterer, vorzugsweise achsparallel zum Kanal 9 sich erstreckender Kanal 15, stellt außerhalb der Ebene X eine hydraulische Verbindung zur Aufnahmebohrung 6 des Druckspeichers her. Der Kanal 15 ist gleichfalls durch eine automatengerechte Bohroperation aus Richtung der Aufnahmebohrung 6 und der Aufnahmebohrung 17 möglich. Der Kanal 15 befindet sich somit zwischen dem Sackloch der Aufnahmebohrung 17 und der senkrecht zur Auslaßventilachse verlaufenden Aufnahmebohrung 5 für die Pumpe. Die oberhalb der ersten Gehäuseebene gelegene zweite Gehäuseebene Y nimmt in möglichst flächenzentraler Lage den in der Abbildung nicht skizzierten Pumpenantrieb innerhalb der Aufnahmebohrung 18 auf. Bei der gewählten Anordnung der vorgeschriebenen Funktionselemente ist überdies bemerkenswert, daß durch die Ausbildung nahezu aller Kanäle 1,2,9-15 als Sackbohrungen keine zusätzlichen Verschlußstopfen in die Kanäle eingesetzt werden müssen. Durch den Entfall von Durchgangsbohrungen bilden die in die Aufnahmebohrungen 5,6,7,16,17 eingesetzten Funktionselemente das Verschlußkonzept des Hydrauliksystems im Gehäuse. Hinsichtlich der Abbildung bleibt zu beachten, daß hinsichtlich der Anzahl der verwendeten Aufnahmebohrungen bzw. Funktionselemente das elektrohydraulische Aggregat für eine Zweikreisbremsanlage in Diagonalbremskreisaufteilung ausgelegt ist. Dies ändert nichts an dem vorbeschriebenen Sachverhalt, der weitgehend nur auf die Einzelheiten und das Wesen der Erfindung gerichtet ist. Zur besseren Überschaubarkeit der einzelnen Verbindungskanäle ist in der Zeichnung auf die Darstellung der zweiten Geräuschdämpfungskammer 7 und den weiteren beiden Druckmittelanschlüssen 8,8' verzichtet worden. Es ist jedoch von einem gleichartigen, anordnungssymmetrischen Aufbau aller Komponenten im Gehäuse auszugehen.

### Bezugszeichenliste

- 1: Saugkanal
- 2: Druckkanal
- 3: Saugventil
- 4: Druckventil
- 5: Aufnahmebohrung
- 6: Aufnahmebohrung
- 7: Geräuschdämpfungskammer
- 8: Druckmittelanschluß
- 8': Druckmittelanschluß
- 9: Kanal
- 10: Kanal
- 11: Kanal
- 12: Kanal
- 13: Kanal
- 14: Kanal
- 15: Kanal
- 16: Aufnahmebohrung
- 17: Aufnahmebohrung
- 18: Aufnahmebohrung

## Patentansprüche

1. Elektrohydraulisches Aggregat zur Druckregelung in Kraftfahrzeugbremsanlagen, mit einem Gehäuse, in dem Kanäle (1, 2, 9-15) und Aufnahmebohrungen (5, 6, 16, 17, 18) für Einlaß- und Auslaßventile, Druckspeicher, Pumpe, Pumpenventile, Pumpenantrieb und Druckmittelanschlüsse (8, 8') angeordnet sind, wobei in einer ersten Gehäuseebene (X) Aufnahmebohrungen (16, 17) für die Einlaß- und Auslaßventile senkrecht einmünden und in einer parallel zur ersten Gehäuseebene (X) gelegenen zweiten Gehäuseebene (Y) die Aufnahmebohrungen (5) für die Pumpe und der Saug- und Druckkanal (1, 2) der Pumpe gelegen sind, wobei der Saugkanal (1) mit einer Aufnahmebohrung (6) des Druckspeichers in Verbindung steht, die sich sowohl in den Bereich der ersten als auch zweiten Gehäuseebene (X, Y) erstreckt, dadurch **gekennzeichnet**, daß sowohl der Saugkanal (1) als auch der Druckkanal (2) auf einer gemeinsamen Achse in der zweiten Gehäuseebene gelegen sind, wobei der Saugkanal (1) das Saugventil (3) der Pumpe aufnimmt und der Druckkanal (2) das Druckventil (4) der Pumpe beinhaltet.

2. Elektrohydraulisches Aggregat nach Anspruch 1, dadurch **gekennzeichnet**, daß die Aufnahmebohrung (5) der Pumpe zwischen dem Saug- und Druckkanal (1,2) angeordnet ist.

3. Elektrohydraulisches Aggregat nach Anspruch 1, dadurch **gekennzeichnet**, daß das Saug- und Druckventil (3,4) aus Richtung der Aufnahmebohrung (6) des Druckspeichers in den Saug- und Druckkanal (1,2) eingesetzt ist.

4. Elektrohydraulisches Aggregat nach Anspruch 3, dadurch **gekennzeichnet**, daß in der nachfolgend definierten Reihenfolge das Druckventil (4) in den Druckkanal (2) und danach das Saugventil (3) in den Saugkanal (1) eingefügt sind.

5. Elektrohydraulisches Aggregat nach Anspruch 1, dadurch **gekennzeichnet**, daß der Druckkanal (2) in ein achsparallel zur Aufnahmebohrung (5) der Pumpe ausgerichtete Geräuschdämpfungskammer (7) einmündet, die im Bereich der zweiten Gehäuseebene (Y) gelegen ist.

6. Elektrohydraulisches Aggregat nach Anspruch 5, dadurch **gekennzeichnet**, daß die Aufnahmebohrung (7) der Geräuschdämpfungskammer zwischen dem Druckkanal (2) und einem achsparallel zum Druckkanal (2) auf der entgegengelegenen Seite der Geräuschdämpfungskammer einmündenden Druckmittelanschluß (8) angeordnet ist, der in der zweiten Gehäuseebene (Y) gelegen ist.

## Claims

1. Electrohydraulic unit for pressure control in automotive vehicle brake systems which includes a housing wherein channels (1, 2, 9-15) and accommodating bores (5, 6, 16, 17, 18) for inlet and outlet valves, pressure accumulator, pump, pump valves, pump drive and pressure fluid ports (8, 8') are incorporated, wherein accommodating bores (16, 17) for the inlet and outlet valves open vertically into a first housing plane (X) and the accommodating bores (5) for the pump and the suction and pressure channel (1, 2) of the pump are arranged in a second housing plane (Y) disposed in parallel to the first housing plane (X), and the suction channel (1) is connected to an accommodating bore (6) of the pressure accumulator which extends both in the area of the first and the second housing planes (X, Y),
**characterized** in that both the suction channel (1) and the pressure channel (2) are positioned on a joint axis in the second housing plane, and the suction channel (1) accommodates the suction valve (3) of the pump and the pressure channel (2) comprises the pressure valve (4) of the pump.

2. Electrohydraulic unit as claimed in claim 1,
**characterized** in that the accommodating bore (5) of the pump is interposed between the suction and pressure channels (1, 2).

3. Electrohydraulic unit as claimed in claim 1,
**characterized** in that the suction and pressure valves (3, 4) are inserted into the suction and pressure channels (1, 2) from the direction of the accommodating bore (6) of the pressure accumulator.

4. Electrohydraulic unit as claimed in claim 3,
**characterized** in that in the following defined order the pressure valve (4) is mounted into the pressure channel (2) and, subsequently, the suction valve (3) is mounted into the suction channel (1).

5. Electrohydraulic unit as claimed in claim 1,
**characterized** in that the pressure channel (2) opens into a noise damping chamber (7) which is aligned paraxially to the accommodating bore (5) of the pump and is positioned in the area of the second housing plane (Y).

6. Electrohydraulic unit as claimed in claim 5,
**characterized** in that the accommodating bore (7) of the noise damping chamber is interposed between the pressure channel (2) and a pressure fluid port (8) which opens paraxially to the pressure channel (2) on the opposite side of the noise damping chamber and is positioned in the second housing plane (Y).

## Revendications

1. Groupe électro-hydraulique pour réguler la pression de systèmes de freinage de véhicules automobiles, comprenant un boîtier dans lequel sont disposés des conduits (1, 2, 9 à 15) et des perçages de positionnement (5, 6, 16, 17, 18) pour des soupapes d'admission et d'échappement, un accumulateur de pression, une pompe, des soupapes de pompe, un entraînement de pompe et des branchements (8, 8') de fluide hydraulique, des perçages de positionnement (16, 17) pour les soupapes d'admission et d'échappement débouchant perpendiculairement dans un premier plan (X) du boîtier et les perçages de positionnement (5) pour la pompe et pour les conduits d'aspiration (1) et de refoulement (2) de la pompe étant situés dans un deuxième plan (Y) du boîtier, parallèle au premier plan (X), le conduit d'aspiration (1) communiquant avec un perçage de positionnement (6) de l'accumulateur de pression, perçage qui s'étend à la fois dans la région du premier plan (X) et dans la région du deuxième plan (Y) du boîtier, **caractérisé** en ce que le conduit d'aspiration (1) et le conduit de refoulement (2) sont situés tous deux sur un axe commun dans le deuxième plan du boîtier, le conduit d'aspiration (1) recevant la soupape d'aspiration (3) de la pompe et le conduit de refoulement (2) contenant la soupape de refoulement (4) de la pompe.

2. Groupe électro-hydraulique selon la revendication 1, **caractérisé** en ce que le perçage de positionnement (5) de la pompe est disposé entre le conduit d'aspiration (1) et le conduit de refoulement (2).

3. Groupe électro-hydraulique selon la revendication 1, **caractérisé** en ce que la soupape d'aspiration (3) et la soupape de refoulement (4) sont installées dans le conduit d'aspiration (1) et le conduit de refoulement (2) depuis la direction du perçage de positionnement (6) de l'accumulateur de pression.

4. Groupe électro-hydraulique selon la revendication 3, **caractérisé** en ce qu'on installe d'abord la soupape de refoulement (4) dans le conduit de refoulement (2), puis la soupape d'aspiration (3) dans le conduit d'aspiration (1), dans cet ordre.

5. Groupe électro-hydraulique selon la revendication 1, **caractérisé** en ce que le conduit de refoulement (2) débouche dans une chambre (7) d'amortissement des bruits, orientée parallèlement à l'axe du perçage de positionnement (5) de la pompe et située dans la région du deuxième plan (Y) du boîtier.

6. Groupe électro-hydraulique selon la revendication 5, **caractérisé** en ce que le perçage de positionnement (7) de la chambre d'amortissement des bruits est disposé entre le conduit de refoulement (2) et un branchement (8) de fluide hydraulique, qui débouche parallèlement à l'axe du conduit de refoulement (2) sur le côté opposé de la chambre d'amortissement des bruits et qui est situé dans le deuxième plan (Y) du boîtier.
